(19) Europäisches Patentamt
European Patent Office
Office européen des brevets

(11) **EP 0 588 783 B1**

(12) **EUROPÄISCHE PATENTSCHRIFT**

(45) Veröffentlichungstag und Bekanntmachung des Hinweises auf die Patenterteilung:
**17.02.1999 Patentblatt 1999/07**

(51) Int Cl.6: **H04L 25/03**

(21) Anmeldenummer: 93890181.6

(22) Anmeldetag: **10.09.1993**

(54) **Leitungsentzerrer**

Line equaliser

Egalisateur de ligne

(84) Benannte Vertragsstaaten:
**AT CH DE FR IT LI LU**

(30) Priorität: **15.09.1992 AT 1837/92**

(43) Veröffentlichungstag der Anmeldung:
**23.03.1994 Patentblatt 1994/12**

(73) Patentinhaber: **KAPSCH AKTIENGESELLSCHAFT**
**A-1121 Wien (AT)**

(72) Erfinder:
• **Bodner, Wolfgang**
**A-1120 Wien (AT)**

• **Bobich, Roland, Dipl.-Ing.**
**A-1170 Wien (AT)**

(74) Vertreter: **Holzer, Walter, Dipl.-Ing. et al**
**Patentanwälte Schütz und Partner,**
**Schottenring 16,**
**Börsegebäude**
**1010 Wien (AT)**

(56) Entgegenhaltungen:
**EP-A- 0 466 434**      **EP-A- 0 492 856**
**EP-A- 0 513 527**      **US-A- 4 817 114**
**US-A- 5 052 024**

**Beschreibung**

Die vorliegende Erfindung betrifft einen ferneinstellbaren Leitungsentzerrer, der am Ende einer Übertragungsleitung angeordnet ist. Ferner bezieht sich die Erfindung auf Netzkomponenten für baumstrukturierte Übertragungsnetze unter Verwendung derartiger Leitungsentzerrer.

Derzeit muß die Einstellung eines Leitungsentzerrers an den Frequenz- und Phasengang der zu entzerrenden Übertragungsleitung vor Ort erfolgen. Insbesondere bei verzweigten Übertragungsnetzen großer Ausdehnung ist die Einstellung von in den Netzknoten angeordneten Leitungsentzerrern wegen der großen räumlichen Entfernungen zeitaufwendig. Derartige, mit Leitungsentzerrern ausgestattete Übertragungsnetze sind beispielsweise Zugfunknetze, bei denen von einer Bahnstrecken-Wartungsstation über leitungsgebundene Verteiler- und Verbindungsstrecken, die entlang der Bahnstrecke verteilte Funkanlagen mit der Wartungsstation verbinden, Sprechverbindung mit einem fahrenden Zug aufgenommen wird.

In der folgenden Beschreibung der Erfindung wird unter dem Begriff "Übertragungsstrecke" eine 4-Draht-Leitung oder ein beliebiger drahtgebundener oder drahtloser 2-Richtungs-Signalweg und unter "Ubertragungsleitung" eine 2-Draht-Leitung oder ein beliebiger drahtgebundener oder drahtloser 1-Richtungs-Signalweg verstanden. Analog wird mit dem Begriff "Freiraumübertragungsstrecke" ein drahtloser 2-Richtungs-Signalweg bezeichnet.

An dieser Stelle sei erwähnt, daß aus der US 5 052 024 ein Kommunikationssystem für Modem-Modem Verbindungen bekannt ist, bei welchem die auf der Übertragungsstrecke zwischen den Modems auftretende Frequenzverschiebung der Modemträgerfrequenz in dem einen Modem (Slave) erkannt wird, um die zum anderen Modem (Master) zurückgesandte Trägerfrequenz entsprechend zu versetzen, so daß letzteres die richtige Trägerfrequenz empfängt und keine eigene Korrektur ausführen muß. Zu diesem Zweck enthält das Slave-Modem einen Detektor für eine Trainings sequenz, die zur Berechnung des Trägerfrequenzversatzes ausgewertet wird. Abgesehen davon enthält das Modem im Eingangsteil ein adaptives FIR-Filter zur Entzerrung des Frequenzganges der Übertragungsleitung.

Aus der EP-A-0 492 856 ist ferner eine Kompensationsanordnung für zwei Sendeempfänger mit zwischenliegender Telefonübertragungsleitung bekannt, wobei der eine Sendeempfänger an den anderen Sendeempfänger ein Trainingssignal sendet, das letzterer dazu verwendet, ein Filter zur Vor-Verzerrung des von ihm zum ersten Sendeempfänger zurückzusendenden Signales einzustellen, um die Verzerrungen auf dem Übertragungsweg zu kompensieren. Das System beruht auf der Annahme, daß die Verzerrungen auf dem Hin- und Rückweg gleich sind. Als Trainingssignal wird unter anderem ein Chirp vorgeschlagen.

Die vorliegende Erfindung setzt sich zum Ziel, einen ferneinstellbaren Leitungsentzerrer zu schaffen, der in großräumigen Ubertragungsnetzen eingesetzt werden kann, u.zw. jeweils am Ende einer Ubertragungsstrecke, und so die Einstellung des Netzes zentral von einem Punkt aus ermöglicht, wenn dieses erstmals abgeglichen oder an geänderte oder hinzugekommene Netzkomponenten angepaßt werden muß. Dieses Ziel wird mit einem am Ende einer Übertragungsleitung angeordneten ferneinstellbaren Leitungsentzerrer erreicht, der sich auszeichnet durch:

einen Signalübertragungsweg mit einem Analog/Digital-Wandler, einem mit Filterkoeffizienten ladbaren Digitalfilter und einem Digital/Analog-Wandler;
einen an den Ausgang des Analog/Digital-Wandlers anschaltbaren Frequenzgangdetektor, der den Frequenzgang eines am Anfang der Übertragungsleitung eingespeisten Chirpsignales detektiert, aus dem Frequenzgang die Filterkoeffizienten für das Digitalfilter (16) ermittelt und damit den Koeffizienteneingang des Digitalfilters ansteuert; und
einen an den Signalübertragungsweg angeschlossenen Steuersequenzdetektor, der ab dem Erkennen einer am Anfang der Übertragungsleitung eingespeisten, dem Chirpsignal vorauseilenden Steuersequenz für eine vorgegebene Zeitdauer die Anschaltung des Frequenzgangdetektors veranlaßt.

Auf diese Weise kann bei entsprechender Codierung der Steuersequenz, so daß nur ein bestimmter Leitungsentzerrer des Netzes anspricht, dieser von jedem beliebigen vorgeordneten Punkt des Netzes zur Durchführung seiner Einstellungsroutine veranlaßt werden, mit der er die Parameter seiner Filterkreise an die vorgeordnete Übertragungsleitung anpaßt. Die erfindungsgemäße Verwendung eines Chirpsignales zum Durchmessen der Leitung hat den Vorteil, daß die gesamte Nutzbandbreite berücksichtigt und die Frequenzgangauswertung mit Hilfe digitaler Signalverarbeitung von einem Signalprozessor durchgeführt werden kann.

Der Frequenzgangdetektor kann beispielsweise nach allgemein bekannten Gradientenoptimierungsalgorithmen, z.B. nach der Wiener-Filtertheorie (LMS-, RLS-Algorithmen od.dgl.) arbeiten. Bevorzugt wird aber die diskrete Fouriertransformation verwendet, weil sie ein unter allen Bedingungen stabiles Verfahren darstellt. Zu diesem Zweck ist das Digitalfilter von linearem Typ und der Frequenzgangdetektor weist in Hintereinanderschaltung ein Digitalfilter mit einer Impulsantwort gleich der Inversen des unverzerrten Chirpsignales, einen Spitzenwertsucher mit Intervallabtaster, dessen Abtastintervall auf den Zeitpunkt des Spitzenwertes symmetriert und gleich der Chirpsignaldauer ist, ein Glied zur schnellen Fouriertransformation (FFT), einen komplexen Dividierer zur elementweisen Division durch vorgegebene Sollkoeffizienten sowie ein Glied zur inversen schnellen Fouriertransformation (FFT) auf. Dieser Aufbau eignet sich besonders zur Implementierung auf einem Signalprozessor.

Um die durch die endliche Länge des Abtastintervalles eingeführten Störeffekte zu kompensieren, besteht eine bevorzugte Ausführungsform der Erfindung darin, daß dem Koeffizienteneingang des Digitalfilters ein Multiplizierer zur elementweisen Multiplikation mit vorgegebenen Fensterfunktionskonstanten, vorzugsweise Hammingfensterkonstanten, vorgeschaltet ist.

Werden die Komponenten des beschriebenen Leitungsentzerrers mit Hilfe von Festkommaarithmetikeinheiten realisiert, ist die korrekte Funktion des Frequenzgangdetektors von einem ausreichenden Signalpegel am Eingang des Leitungsentzerrers abhängig. Zu diesem Zweck weist der Leitungsentzerrer bevorzugt auf:

einen dem Analog/Digital-Wandler vorgeschalteten regelbaren Verstärker; und

einen an den Ausgang des Analog/Digital-Wandlers anschaltbaren Leitungsverlustauswertungsweg mit einem sinussignalangepaßten Filter für ein am Anfang der Übertragungsleitung eingespeistes Sinussignal, einem Gleichrichter und einem Tiefpaßfilter, dessen Ausgang den Regeleingang des Verstärkers ansteuert;

wobei der Steuersequenzdetektor ab dem Erkennen einer am Anfang der Übertragungsleitung eingespeisten, dem Sinussignal vorauseilenden zweiten Steuersequenz für eine vorgegebene Zeitdauer die Anschaltung des Leitungsverlustauswertungsweges veranlaßt.

Auf diese Weise kann vor dem Frequenzgangausgleich eine Kompensation der generellen Leitungsdämpfung durchgeführt werden.

Es ist vorteilhaft, wenn der Steuersequenzdetektor auf in einem Frequenzband außerhalb des Nutzsignalbandes übertragene FSK-modulierte Steuersequenzen anspricht und dazu ein auf dieses Frequenzband abgestimmtes Bandpaßfilter mit nachgeschaltetem FSK-Demodulator aufweist. Dadurch wird eine Störung des Nutzsignales durch die im Netz laufenden Steuersequenzen vermieden. Lediglich bei der Übertragung eines Chirpsignales, was etwa 0,2 s dauert, wird die Nutzsignalübertragung unterbrochen.

Ein zweiter Aspekt der vorliegenden Erfindung beschäftigt sich mit der Schaffung von Netzkomponenten für baumstrukturierte Übertragungsnetze unter Verwendung erfindungsgemäßer Leitungsentzerrer. Beispielsweise sind zum Betrieb der derzeit in Verwendung stehenden Zugfunknetze drei Arten von ferneinstellbaren Netzkomponenten erforderlich, um das gesamte Übertragungsnetz von einem Punkt aus abgleichen zu können:

- Verteiler-Netzkomponenten für die Netzknoten;
- Zwischen-Netzkomponenten zur Einschaltung zwischen zwei Übertragungsstrecken und zur Ankopplung dieser Übertragungsstrecken an eine Freiraumübertragungsstrecke, wobei letztere im allgemeinen direkt zur Versorgung eines Zuges in einem bestimmten Gleisabschnitt dient; und
- End-Netzkomponenten für einzelne Übertragungsstrecken und zur Ankopplung dieser Übertragungsstrecken an weiterführende Freiraumübertragungsstrecken, wobei letztere ebenfalls die Versorgung eines bestimmten Gleisabschnittes übernehmen oder auch zur Weitergabe des Signales an andere Netzsegmente dienen.

Gemäß der Erfindung werden die Verteiler-, Zwischen- und End-Netzkomponenten entsprechend den Maßnahmen der Ansprüche 6, 7 bzw. 10 aufgebaut.

Bei Zugfunkanwendungen besteht ferner die Forderung, daß mehrere Netzkomponenten, welche aufeinanderfolgende Gleisabschnitte eines gemeinsamen Bahnstreckenbereiches versorgen, ihre Signale zum selben Zeitpunkt mit derselben Trägerfrequenz in den Freiraum abstrahlen (Gleichwellenbetrieb), so daß es zu keinen Interferenzeffekten beim Signalempfang im fahrenden Zug kommt. Diese Forderung ist insbesondere von Zwischen-Netzkomponenten zu erfüllen.

Eine bevorzugte Ausführungsform der erfindungsgemäßen Zwischen-Netzkomponente besteht daher darin, daß sie einen Steuersequenzdetektor aufweist, der ab dem Erkennen einer in das Übertragungsnetz eingespeisten Steuersequenz einen Chirpgenerator an den Leitungstreiber für die abgehende Übertragungsleitung der zweiten Seite anschaltet, und daß der Freiraumsender mit einem Zeitzähler versehen ist, dessen Starteingang an den Leitungstreiber für die abgehende Übertragungsleitung der zweiten Seite und dessen Stopeingang an den Leitungsentzerrer für die ankommende Übertragungsleitung der zweiten Seite angeschlossen ist und dessen Zählwertausgang den Regeleingang eines regelbaren Verzögerungsgliedes ansteuert, das im Freiraumsender angeordnet ist, wobei die Zwischen-Netzkomponente ferner mit einem weiteren Steuersequenzdetektor ausgestattet ist, der ab dem Erkennen einer in das Netz eingespeisten Steuersequenz die Rückgabe eines von einer vorgeordneten, gleichartigen Zwischen-Netzkomponente empfangenen Chirpsignales oder die Weitergabe bis zu einer nachgeordneten Netzkomponente auslöst.

Auf diese Weise kann das dem Freiraumsender der Zwischen-Netzkomponente zugeführte Signal um die Hälfte der Laufzeit verzögert werden, die das Signal von dieser Netzkomponente zur letzten der jeweiligen Gleichwellengruppe und wieder zurück benötigt.

Die Start- und Stopgenauigkeit des Zeitzählers wird erhöht, wenn gemäß einer bevorzugten Ausführungsform der Erfindung den Start- und Stopeingängen des Zeitzählers jeweils ein Filter mit einer Impulsantwort gleich der Inversen des unverzerrten Chirpsignales und ein diesem Filter nachfolgender Spitzenwertsucher vorgeschaltet werden.

Um den Laufzeitausgleich zwischen einer Zwischen-Netzkomponente und einer nachfolgenden End-Netzkomponente zu ermöglichen, wird letztere bevorzugt mit einem Steuersequenzdetektor ausgestattet, der ab dem Erkennen einer in das Netz eingespeisten Steuersequenz die Rückgabe eines von einer vorgeordneten Netzkomponente empfangenen Chirpsignales auslöst.

Bevorzugt wird jeder Leitungstreiber einer Netzkomponente mit einem durch eine Steuersequenz auslösbaren Chirp- und Sinussignalgenerator ausgestattet. Damit kann das Chirp- bzw. Sinussignal in jeder Netzkomponente regeneriert werden, um der nachfolgenden Netzkomponente die ungestörte Messung der ankommenden Übertragungsleitung zu ermöglichen.

Um die Kompensation eines Teilverästelungsgebietes des Übertragungsnetzes von einem entfernten Punkt aus einzuleiten, ist es vorteilhaft, wenn jeder Leitungsentzerrer einen Befehlssequenzdetektor aufweist, der bei Erkennen einer ihn betreffenden, in die Übertragungsleitung eingespeisten Befehlssequenz eine entsprechende Steuersequenz auslöst.

Der konstruktive Aufbau einer Netzkomponente vereinfacht sich, wenn die Leitungstreiber, Leitungsentzerrer, Freiraumsender und -empfänger der Netzkomponente untereinander über einen alle Steuersequenzen führenden Datenbus und einen alle Nutzsignale führenden Signalbus mit Zeitmultiplexzuordnung für die einzelnen Nutzsignale verbunden sind. Die Leitungstreiber, Leitungsentzerrer, Freiraumsender und -empfänger können so als Module vorgefertigt und wahlweise zu einer Verteiler-, Zwischen- oder End-Netzkomponente zusammengestellt werden.

Die Erfindung wird nun an Hand von in den Zeichnungen dargestellten Ausführungsbeispielen näher erläutert, in denen zeigen:

Fig. 1 die Anordnung des ferneinstellbaren Leitungsentzerrers am Ende einer Übertragungsleitung sowie deren allgemeine Beschaltung;

Fig. 2 ein Blockschaltbild des Leitungsentzerrers;

Fig. 3 ein Schaltschema eines baumstrukturierten Übertragungsnetzes, bei dem erfindungsgemäße Leitungsentzerrer und Netzkomponenten Anwendung finden;

Fig. 4 ein Blockschaltbild einer Verteiler-Netzkomponente,

Fig. 5 ein Blockschaltbild einer Zwischen-Netzkomponente;

Fig. 6 ein Laufzeitausgleichmodul der Zwischen-Netzkomponente aus Fig. 5;

Fig. 7 ein Blockschaltbild einer End-Netzkomponente;

Fig. 8 die Frequenzbandaufteilung zwischen Nutz- und Meßsignal einerseits und Steuersignal anderseits; und die

Fig. 9 bis 13 Frequenzgangdiagramme von Signalen, die im Frequenzgangdetektor auftreten.

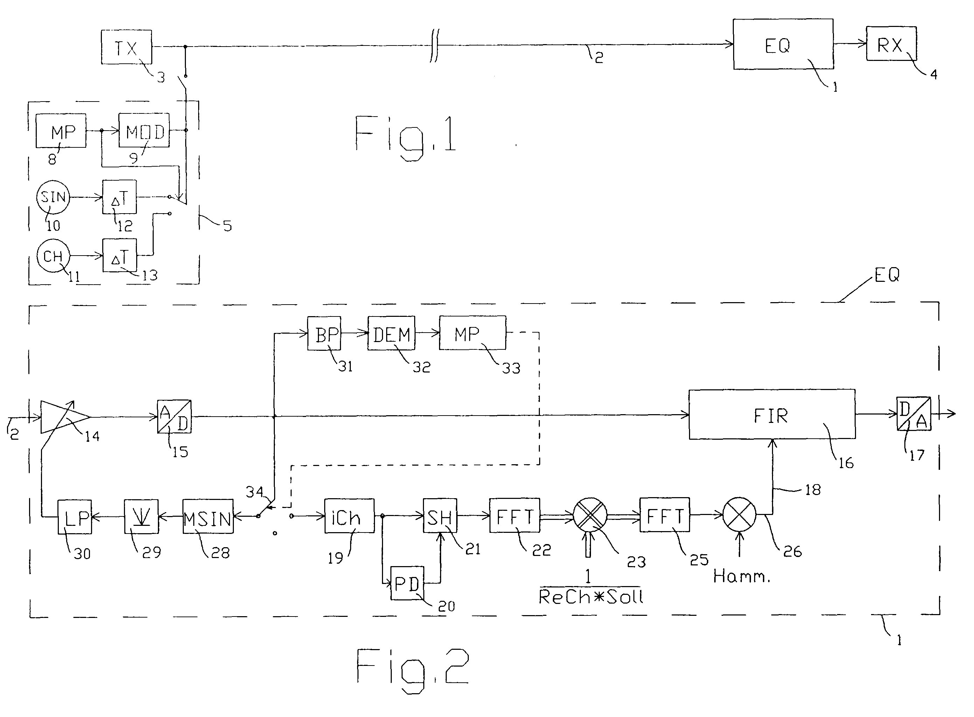

Fig. 1 zeigt die Anordnung eines Leitungsentzerrers 1 am Ende einer Übertragungsleitung 2, z.B. einer 2-Draht-Leitung, die einen Sender 3 mit einem Empfänger 4 verbindet. Der Leitungsentzerrer 1 ist dem Empfänger 4 vorgeschaltet und kompensiert den Frequenzgang und die Dämpfung der Leitung 2 in Abhängigkeit von Meß- und Steuersignalen, die am Anfang der Leitung 2 von einer geeigneten Einrichtung 5 eingespeist werden.

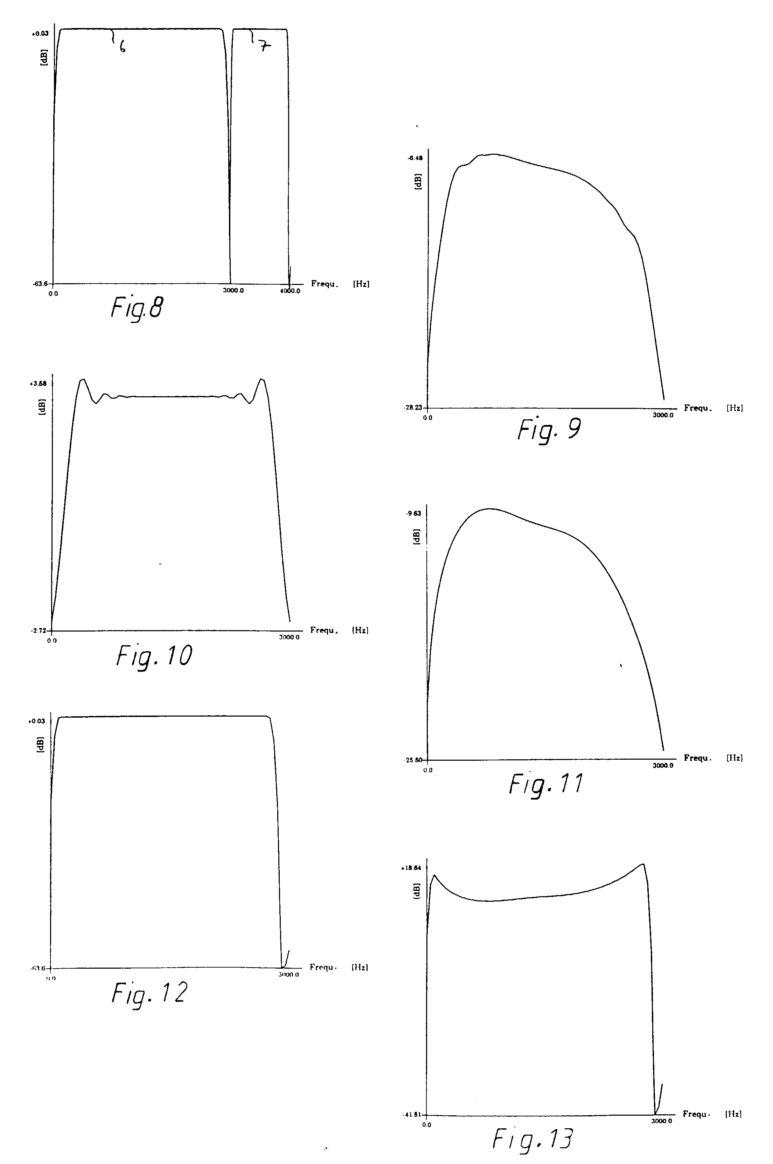

Beim vorliegenden Ausführungsbeispiel entzerrt der Leitungsentzerrer 1 die Nutzsignale auf der Leitung 2 im Frequenzbereich von 0 bis 3.000 Hz und wird durch Steuersignale gesteuert, die im Frequenzbereich von 3.000 bis 4.000 Hz übertragen werden. In Fig. 8 ist diese Frequenzaufteilung in Nutzsignalband 6 und Steuersignalband 7 veranschaulicht.

Als Steuersignale werden serielle Bitsequenzen mit einer Baudrate von 60 Hz in FSK-Modulation verwendet, wobei die Frequenz 3,275 Hz für Logisch 0 und die Frequenz 3,425 Hz für Logisch 1 steht.

Andere Frequenzbandaufteilungen bzw. Steuersignalcodierungen sind dem Fachmann geläufig.

Die Einrichtung 5 zum Fernsteuern des Leitungsentzerrers 1 verfügt über einen Mikroprozessor 8 zur Zusammenstellung der Bitsequenzen, einen nachgeschalteten FSK-Modulator 9 sowie über Sinus- und Chirpsignalgeneratoren 10, 11, die über jeweils ein Zeitverzögerungsglied 12, 13 vom Mikroprozessor 8 an die Übertragungsleitung 2 angelegt werden können. Die Zeitverzögerung gewährleistet, daß jedem Sinus- bzw. Chirpsignal ein FSK-moduliertes Steuersignal vorauseilt und den Leitungsentzerrer 1 in Meßbereitschaft versetzt. In Meßbereitschaft und während der Messung unterbricht der Leitungsentzerrer die Signalweitergabe zum Empfänger 4.

Das Chirpsignal überstreicht in einer Zeit von ca. 0,2 s den Frequenzbereich von 0 bis 3.000 Hz. Der über die Zeit gemittelte, ideale Frequenzgang eines derartigen Chirpsignales entspricht dem Kurventeil 6 in Fig. 8. Die endliche Länge des Chirpsignales führt zu Störeffekten im Frequenzbereich, so daß der über die Zeit gemittelte Frequenzgang des tatsächlich verwendeten Chirpsignales der Kurve in Fig. 10 entspricht.

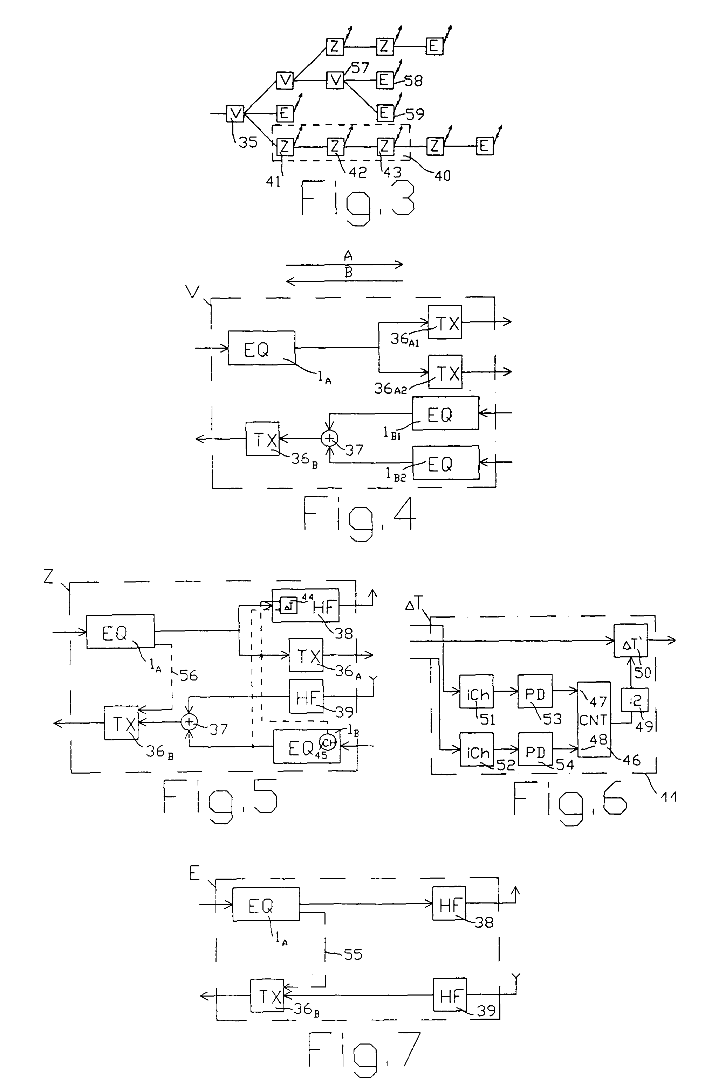

Fig. 2 zeigt das Blockschaltbild des Leitungsentzerrers 1 aus Fig. 1. Der Signalübertragungsweg des Leitungsentzerrers setzt sich aus einem regelbaren Eingangs-Verstärker 14, einem nachgeschalteten Analog/Digital-Wandler 15, einem diesem nachgeordneten linearen Digitalfilter 16 sowie einem Ausgangs-Digital/Analog-Wandler 17 zusammen. Das Digitalfilter 16 ist von linearem Typ mit einer Impulsantwort begrenzter Länge. Die Filterkoeffizienten werden über einen Eingang 18 geladen, der an den Ausgang eines Frequenzgangdetektors 19 - 26 angeschlossen ist. Der Regeleingang des Eingangs-Verstärkers 14 wird seinerseits vom Ausgang eines Leitungsverlustauswertungsweges 28 - 30 angesteuert.

Die wahlweise Anschaltung des Frequenzgangdetektors 19 - 26 bzw. des Leitungsverlustauswertungsweges 28 - 30 an den Signalübertragungsweg 14 - 17 wird von einem ebenfalls am Signalübertragungsweg 14 - 17 angeschlossenen Steuersequenzdetektor 31 - 33 über einen Schalter 34 bewirkt. Der Steuersequenzdetektor 31 - 33 weist ein Eingangs-Bandpaßfilter 31, welches das Steuersignal im Bereich von 3.000 bis 4.000 Hz (Fig. 8) extrahiert, und einen FSK-Demodulator 32 auf, der daraus Steuer-Bitsequenzen für einen Mikroprozessor 33 ableitet. Erkennt dieser eine an ihn adressierte Frequenzgangausgleich-Steuersequenz, so gibt er den Frequenzgangdetektor 19 - 26 für eine vorgegebene Zeitdauer frei. Letzterer arbeitet wie folgt:

Das durch die Übertragungsleitung 2 verzerrte Empfangssignal $Chirp_v$, das zu einem noch unbekannten Zeitpunkt den ausgesendeten Chirp mit sich führt, durchläuft ein lineares Digitalfilter 19 endlicher Länge N mit einer Impulsantwort, die gleich der inversen Chirpfunktion ist. Die inverse Chirpfunktion ist jene Funktion $Chirp_o^{-1}$, welche der folgenden Gleichung genügt:

$$\delta\left\{nT\right\} = Chirp_o\left\{nT\right\} * Chirp_o^{-1}\left\{nT\right\} \qquad (1)$$

wobei $Chirp_o$ die Zeitfunktion des unverzerrten, von der Einrichtung 5 ausgesandten Chirpsignales, $\delta$ die Dirac-Funktion und * der Faltungsoperator ist.

Am Ausgang des Filters 19 tritt daher das Signal $S_1$ auf:

$$S_1\left\{nT\right\} = Chirp_v\left\{nT\right\} * Chirp_o^{-1}\left\{nT\right\} \qquad (2)$$

Dem Filter 19 ist ein Spitzenwertsucher 20 nachgeschaltet, der den Zeitpunkt mT des Spitzenwertes von $S_1$ feststellt und ihn einem Intervallabtaster 21 mit einer Intervallbreite von N Abtastwerten zuführt, die symmetrisch zum Zeitpunkt mT liegen. Der Ausgang des Intervallabtasters 21 führt daher den endlichen Signalvektor $\vec{S_2}$ der Länge N:

$$S_1\left\{\left[m - \frac{N}{2}\right]T \quad \ldots \quad \left[m + \frac{N}{2}\right]T\right\} = \vec{S_2}\left\{\left[0 \ldots (N-1)\right]T\right\} \qquad (3)$$

Die Intervallbreite N wird sowohl gleich der Länge des Filters 19 als auch der Länge des Chirpsignales gewählt und bestimmt die Auflösung des Systems.

Der Signalvektor $\vec{S_2}$ wird anschließend einem Glied 22 zur schnellen Fouriertransformation (FFT) zugeführt, das seine komplexe Fouriertransformierte $\vec{S_3}$ berechnet:

$$\vec{\bar{S}}_3\left\{jn\Omega\right\} \xleftarrow{\ FFT\ } \vec{S_2}^*\left\{nT\right\} \qquad (4)$$

Der Vektor $\vec{S_3}$ stellt den (noch mit Fehlern behafteten) Frequenzgang der Übertragungsleitung 2 dar und ist in Fig. 9 gezeigt. Der Vektor $\vec{S_3}$ wird dann in einem Dividierer 23 elementweise durch einen komplexen Korrekturvektor $\overline{ReCh}$ dividiert, um jene Randstörungen zu beseitigen, die auf die zeitliche Begrenzung des verwendeten Chirpsignales $Chirp_o$ zurückzuführen sind:

$$\tilde{S}_4\{jn\Omega\} = \frac{\tilde{S}_3\{jn\Omega\}}{\overline{ReCh}\{jn\Omega\}} \qquad (5)$$

Der Korrekturvektor $\overline{ReCh}$ ist in Fig. 10 und der bereinigte Frequenzgangvektor $\vec{S}_4$ in Fig. 11 dargestellt.

Der bereinigte Frequenzgangvektor $\vec{S}_4$ wird ferner elementweise durch einen komplexen Sollvektor $\overline{Soll}$ (Fig. 12) dividiert, der den idealen bzw. gewünschten Frequenzgang der Übertragungsleitung 2 darstellt:

$$\tilde{S}_5\{jn\Omega\} = \frac{\tilde{S}_4\{jn\Omega\}}{\overline{Soll}\{jn\Omega\}} \qquad (6)$$

Das Ergebnis dieser Division ist der komplexe Vektor $\vec{S}_5$ des Ausgleichfrequenzganges für das Filter 16 und in Fig. 13 dargestellt. Die Division durch den Korrekturvektor $\overline{ReCh}$ und durch den Sollvektor $\overline{Soll}$ kann in einem Schritt als komplexe elementweise Multiplikation mit einem entsprechenden Vektor $\overline{1/Rech\cdot Soll}$ erfolgen.

Durch inverse Fouriertransformation in einem Glied 25 zur inversen schnellen Fouriertransformation (FFT) wird anschließend aus dem Ausgleichsfilter-Frequenzgangvektor $\vec{S}_5$ der vorläufige Filterkoeffizientenvektor $\vec{S}_6$ für das Ausgleichsfilter 16 im Zeitbereich erhalten:

$$\vec{S}_6\{nT\} \xleftarrow{\ FFT^{-1}\ } \tilde{S}_5\{jn\Omega\} \qquad \cdot \quad (7)$$

Um die durch die endliche Länge N des Systems hervorgerufenen Fehler auszugleichen, wird der Vektor $\vec{S}_6$ in einem elementweisen Multiplizierer 26 mit einer Fensterfunktion, z.B. einem Hammingfenster $\overline{Hamm}$ gewichtet, dessen Koeffizienten wie folgt gewählt werden:

$$\overrightarrow{Hamm}\{nT\} = \left[0.54 - 0.46\cos\left(\frac{2\pi nT}{NT}\right)\right] \quad 0 \le n < N \qquad (8)$$

Am Ausgang des Multiplizierers 26 ergeben sich daher die Koeffizienten für das Filter 16 zu

$$\text{FIR - Filterkoeffizienten } \{n\} \equiv \vec{S}_6\{nT\}\cdot\overrightarrow{Hamm}\{nT\} \ 0 \le n < N \qquad (9)$$

Die Filterkoeffizienten werden über den Eingang 18 in das Filter 16 geladen und bleiben bis zum nächsten Frequenzgangausgleich gespeichert.

Im folgenden wird der Leitungsverlustausgleich beschrieben:

Wenn der Steuersequenzdetektor 31 - 33 eine ihn betreffende Leitungsverlustausgleich-Steuersequenz erkennt, schaltet er den Leitungsverlustauswertungsweg 28 - 30 für eine vorgegebene Zeitdauer an den Signalübertragungsweg 14 - 17 an. Dieser ist zur Auswertung eines Sinussignales ausgelegt, das von der Einrichtung 5 mit einer definierten Frequenz von z.B. 1 kHz und einem definierten Sendepegel von z.B. -6 dBm an 600$\Omega$ kurzzeitig ausgesandt wird.

Das durch die Übertragungsleitung 2 abgeschwächte Empfangssignal ES, das zu einem noch unbekannten Zeitpunkt das ausgesandte Sinussignal mit sich führt, durchläuft ein signalangepaßtes Filter 28, welches nur das vordefinierte Sinussignal passieren läßt:

$$S_A\{nT\} = \sum_{k=0}^{K-1} ES\{(k+n)T\} \cdot MS\{kT\} \qquad (10)$$

worin MS die Impulsantwort des signalangepaßten Filters 28 und $S_A$ dessen Ausgangssignal ist. Am Ausgang des Filters 28 wird von einem (nicht gezeigten) Schwellwertdetektor an Hand des Signales $S_A$ die Entscheidung getroffen, ob das Sinussignal anliegt, in welchem Fall die weitere Verarbeitung freigegeben wird. Das Empfangssignal ES wird dann in einem Gleichrichter 29 gleichgerichtet,

$$S_B\{nT\} = \left|\left(ES\{nT\}\right)\right| \qquad (11)$$

und das Gleichrichterausgangssignal $S_B$ wird einem FIR-Tiefpaßfilter 30 mit den Filterkoeffizienten TP zugeführt, das seinen Gleichrichtwert Eff bestimmt:

$$Eff\{nT\} = \sum_{k=0}^{K-1} S_B\{(k+n)T\} \cdot TP\{kT\}, \qquad (12)$$

welcher dem Signalpegel des Empfangssignales ES proportional ist. Abhängig vom Gleichrichtwert Eff wird schließlich der regelbare Verstärker 14 eingestellt.

Fig. 3 zeigt schematisch ein baumstrukturiertes Übertragungsnetz mit Verteiler-Netzkomponenten V, Zwischen-Netzkomponenten Z und End-Netzkomponenten E, die durch Übertragungsstrecken miteinander verbunden sind, wobei von den Zwischen- und End-Netzkomponenten Z, E durch Pfeile angedeutete Freiraumübertragungsstrekken abgehen. Die einzelnen Netzkomponenten sind mit ferneinstellbaren Leitungsentzerrern der beschriebenen Art ausgestattet. Zur Entzerrung des dargestellten Netzes werden entsprechende Steuersequenzen von der Verteiler-Netzkomponente 35 an der Baumwurzel ausgesandt und von den Verteiler- und Zwischen-Netzkomponenten in Baumverästelungsrichtung weitergeleitet bzw. verteilt, wobei jedesmal im Anschluß an das Absenden einer Steuersequenz ein Chirpsignal gesendet wird, das von der empfangenden Netzkomponente zur Entzerrung der vorgeordneten Übertragungsleitung verwendet wird. Die End-Netzkomponenten reflektieren die Steuersequenzen zurück zur Baumwurzel, wodurch die Netzentzerrung in der umgekehrten Richtung eingeleitet wird. Die rückkehrenden Steuersequenzen werden von der Verteiler-Netzkomponente 35 an der Baumwurzel erkannt und nicht mehr weitergeleitet.

Fig. 4 zeigt den Aufbau einer Verteiler-Netzkomponente V, wobei mit dem Index A die Signalrichtung von der Baumwurzel zur Verästelung und mit dem Index B die entgegengesetzte Signalrichtung bezeichnet ist. Die Verteiler-Netzkomponente V weist einen Leitungsentzerrer $1_A$ für die von der Baumwurzel ankommende Übertragungsleitung auf, der zwei Leitungstreiber $36_{A1}$ und $36_{A2}$ für zwei zur Baumverästelung abgehende Übertragungsleitungen ansteuert, sowie zwei Leitungsentzerrer $1_{B1}$ und $1_{B2}$ für die von der Baumverästelung ankommenden Übertragungsleitungen, welche über einen Additionsknoten 37 einen gemeinsamen Leitungstreiber $36_B$ für die zur Baumwurzel abgehende Übertragungsleitung ansteuern.

Fig. 5 zeigt den Aufbau einer Zwischen-Netzkomponente Z. Im Unterschied zur Verteiler-Netzkomponente weist diese anstelle des Leitungstreibers $36_{A2}$ einen Freiraumsender 38 sowie anstelle des Leitungsentzerrers $1_{B2}$ einen Freiraumempfänger 39 auf.

Mehrere Zwischen-Netzkomponenten Z können gemäß Fig. 3 einem gemeinsamen Empfangsgebiet 40 zugeordnet sein, in das ihre Freiraumsender 38 ohne gegenseitige Zeitverschiebung abstrahlen sollen. Zu diesem Zweck ist jedem Freiraumsender 38 ein ferneinstellbarer Zeitverzögerungsschaltkreis 44 vorgeschaltet, der in Fig. 6 ausführlicher dargestellt ist.

Das Sendesignal des Freiraumsenders 38 der Netzkomponente 41 (Fig. 3) muß um die Signallaufzeit von der Komponente 41 zur Komponente 43 und das Sendesignal des Freiraumsenders 38 der Netzkomponente 42 um die Signallaufzeit von der Komponente 42 zur Komponente 43 verzögert werden.

Nicht dargestellte Steuersequenzdetektoren in den Netzkomponenten 41 bis 43 erkennen an Hand der Adresse einer Laufzeitausgleich-Steuersequenz, ob sie am Anfang (41), in der Mitte (42) oder am Ende (43) des Empfangsbereiches 40 stehen und gehen in eine entsprechende Betriebsart über.

Die Steuersequenz wird von der Anfangskomponente 41 bis zur Endkomponente 43 und wieder zurück geschickt und versetzt die Komponenten in die richtige Betriebsart. Die zurückgekehrte Steuersequenz wird vom Leitungsentzerrer $1_B$ (Fig. 5) der in Richtung B ankommenden Übertragungsleitung der Zwischen-Netzkomponente 41 erkannt, woraufhin dieser einen Chirpsignalgenerator 45 an den Leitungstreiber $36_A$ für die in Richtung A abgehende Übertragungsleitung anschaltet. Entsprechend ihrer Betriebsart geben die Zwischen-Netzkomponenten 42 dieses Chirpsignal ohne Bearbeitung weiter, bzw. die am Ende des Empfangsbereiches 40 angeordnete Zwischen-Netzkomponente 43 gibt es in Signalrichtung B zur Anfangs-Komponente 41 zurück.

Der Zeitverzögerungsschaltkreis 44 jeder Zwischen-Netzkomponente verfügt über einen Zeitzähler 46 (Fig. 6), dessen Starteingang 47 an den Signalweg zum Leitungstreiber $36_A$ für die in Richtung A abgehende Übertragungsleitung und dessen Stopeingang 48 an den Leitungsentzerrer $1_B$ für die in Richtung B ankommende Übertragungsleitung angeschlossen ist. Somit zählt der Zeitzähler 46 die Zeit zwischen dem Absenden des Chirpsignales durch den Leitungstreiber $36_A$ und der Ankunft des rückkehrenden Chirpsignales im Leitungstreiber $1_B$. Die Hälfte dieser Zeit stellt die Signallaufzeit zwischen dieser Komponente (41 bzw. 42) und der Endkomponente 43 dar. Der Zählwertausgang des Zeitzählers 46 ist über einen Dividiert-durch-2-Teiler 49 direkt dem Regeleingang eines regelbaren Verzögerungsgliedes 50 zugeführt, das dem Freiraumsender 38 vorgeschaltet ist.

Wenn die Zwischen-Netzkomponente in der Betriebsart Endkomponente arbeitet (43), verbindet ihr Steuersequenzdetektor den Ausgang des Leitungsentzerrers $1_A$ über einen internen Signalweg 56 direkt mit dem Eingang des Leitungstreibers $36_B$, so daß das ankommende Chirpsignal reflektiert wird.

Nach einem Hin- und Rücklauf des Chirpsignales gehen die Zwischen-Netzkomponenten 41 - 43 wieder in den Normalbetrieb über.

In Fig. 6 sind den Start- und Stopeingängen 47 und 48 des Zeitzählers 46 Filter und Spitzenwertsucher vorgeschaltet, welche die exakten Auftrittszeitpunkte der Chirpsignale detektieren. Die Filter 51, 52 entsprechen dem Filter 19 aus Fig. 2 und die Spitzenwertsucher 53, 54 dem Spitzenwertsucher 20 aus Fig. 2, so daß auf deren Beschreibung verwiesen wird.

Fig. 7 zeigt den Aufbau einer End-Netzkomponente E aus Fig. 3. Die End-Netzkomponente weist einen Leitungsentzerrer $1_A$ für die von der Baumwurzel in Signalrichtung A ankommende Übertragungsleitung auf, der einen Freiraumsender 38 ansteuert, sowie einen Freiraumempfänger 39, welcher einen Leitungstreiber $36_B$ für die in Signalrichtung B zur Baumwurzel abgehende Übertragungsleitung ansteuert. Ferner ist ein (nicht dargestellter) Steuersequenzdetektor vorgesehen, der ab dem Erkennen einer entsprechenden Steuersequenz die Rückgabe eines empfangenen Chirpsignales über einen internen Signalweg 55 veranlaßt.

Die Leitungstreiber 36 der Netzkomponenten V, Z und E sind weiters jeweils mit einem (nicht dargestellten) Chirp- und Sinussignalgenerator ausgestattet, der in den Betriebsarten Frequenzgang- und Leitungsverlustausgleich das Meßsignal regeneriert. In der Laufzeitausgleich-Betriebsart der Mittel- und Endkomponenten 42, 43 unterbleibt diese Regeneration, um die Messung der Signallaufzeit nicht zu verfälschen.

Ferner kann jeder Leitungsentzerrer mit einem (nicht dargestellten) Befehlssequenzdetektor ausgestattet werden, der auf eine bestimmte, an ihn gerichtete, in das Netz eingespeiste Befehlssequenz anspricht, diese in eine entsprechende Steuersequenz umsetzt und weitergibt. Dadurch kann beispielsweise von der Verteiler-Netzkomponente 35 (Fig. 3) eine Befehlssequenz in das Netz ausgesandt werden, die erst in der Verteiler-Netzkomponente 57 in eine Steuersequenz umgesetzt wird und von dort die Entzerrung der Übertragungsstrecken zu den End-Netzkomponenten 58 und 59 einleitet.

Die in den Zeichnungen dargestellten diskreten Funktionskomponenten können in Form von Softwarekomponenten realisiert werden, wobei jeweils alle Komponenten eines Leitungsentzerrers, eines Leitungstreibers, eines Freiraumsenders oder eines Freiraumempfängers von einem Mikroprozessor/Signalprozessor-Paar ausgeführt werden. Die Aufgaben des Steuersequenzdetektors werden vom Mikroprozessor übernommen, während die Aufgaben des Frequenzgangdetektors, des Leitungsverlustauswertungsweges, des Signalübertragungsweges und des Zeitverzögerungsschaltkreises vom Signalprozessor übernommen werden.

Ein Mikroprozessor/Signalprozessor-Paar, das je nach Konfiguration einen Sender, Empfänger, Treiber oder Entzerrer verkörpert, ist mit den restlichen Treibern, Entzerrern, Sendern und Empfängern einer Netzkomponente V, Z oder E über ein gemeinsames Bussystem verbunden, das aus einem alle Steuersequenzen führenden Datenbus und einem alle Nutzsignale führenden Signalbus besteht. Jeder komponenteninternen Signalverbindung wird auf dem Signalbus ein Zeitschlitz zugeordnet. Die in den Fig. 4 bis 7 dargestellten Verbindungslinien zwischen den Komponenten 1, 36, 38 und 39 entsprechen daher bestimmten Zeitschlitzzuordnungen. Es ist ersichtlich, daß die mit strichlierten Linien eingezeichneten modulübergreifenden Querverbindungen durch einfachen Zugriff des einen Modules auf den einem anderen Modul zugeordneten Eingangs- oder Ausgangszeitschlitz hergestellt werden können.

**Patentansprüche**

1. Ferneinstellbarer Leitungsentzerrer (1), der am Ende einer Übertragungsleitung (2) angeordnet ist, dadurch gekennzeichnet, daß der Leitungsentzerrer (1) aufweist:

    einen Signalübertragungsweg (14 - 17) mit einem Analog/Digital-Wandler (15), einem mit Filterkoeffizienten ladbaren Digitalfilter (16) und einem Digital/Analog-Wandler (17);
    einen an den Ausgang des Analog/Digital-Wandlers (15) anschaltbaren Frequenzgangdetektor (19 - 26), der den Frequenzgang eines am Anfang der Übertragungsleitung (2) eingespeisten Chirpsignales detektiert, aus dem Frequenzgang die Filterkoeffizienten für das Digital-Filter (16) ermittelt und damit den Koeffizienteneingang (18) des Digitalfilters (16) ansteuert; und

einen an den Signalübertragungsweg (14 - 17) angeschlossenen Steuersequenzdetektor (31 - 33), der ab dem Erkennen einer am Anfang der Übertragungsleitung (2) eingespeisten, dem Chirpsignal vorauseilenden Steuersequenz für eine vorgegebene Zeitdauer die Anschaltung des Frequenzgangdetektors (19 - 26) veranlaßt.

2. Leitungsentzerrer nach Anspruch 1, dadurch gekennzeichnet, daß das Digitalfilter (16) von linearem Typ ist und der Frequenzgangdetektor (19 - 26) in Hintereinanderschaltung ein Digitalfilter (19) mit einer Impulsantwort gleich der Inversen des unverzerrten Chirpsignales, einen Spitzenwertsucher (20) mit Intervallabtaster (21), dessen Abtastintervall auf den Zeitpunkt des Spitzenwertes symmetriert und gleich der Chirpsignaldauer ist, ein Glied (22) zur schnellen Fouriertransformation (FFT), einen komplexen Dividierer (23) zur elementweisen Division durch vorgegebene Sollkoeffizienten sowie ein Glied (25) zur inversen schnellen Fouriertransformation (FFT) aufweist.

3. Leitungsentzerrer nach Anspruch 1 oder 2, dadurch gekennzeichnet, daß dem Koeffizienteneingang (18) des Digitalfilters (16) ein Multiplizierer (26) zur elementweisen Multiplikation mit vorgegebenen Fensterfunktionskonstanten, vorzugsweise Hammingfensterkonstanten, vorgeschaltet ist.

4. Leitungsentzerrer nach einem der Ansprüche 1 bis 3, dadurch gekennzeichnet, daß der Leitungsentzerrer (1) ferner aufweist:

einen dem Analog/Digital-Wandler (15) vorgeschalteten regelbaren Verstärker (14); und

einen an den Ausgang des Analog/Digital-Wandlers (15) anschaltbaren Leitungsverlustauswertungsweg (28 - 30) mit einem sinussignalangepaßten Filter (28) für ein am Anfang der Übertragungsleitung (2) eingespeistes Sinussignal, einem Gleichrichter (29) und einem Tiefpaßfilter (30), dessen Ausgang den Regeleingang des Verstärkers (14) ansteuert;

wobei der Steuersequenzdetektor (31 - 33) ab dem Erkennen einer am Anfang der Übertragungsleitung (2) eingespeisten, dem Sinussignal vorauseilenden zweiten Steuersequenz für eine vorgegebene Zeitdauer die Anschaltung des Leitungsverlustauswertungsweges (28 - 30) veranlaßt.

5. Leitungsentzerrer nach einem der Ansprüche 1 bis 4, dadurch gekennzeichnet, daß der Steuersequenzdetektor (31 - 33) auf in einem Frequenzband außerhalb des Nutzsignalbandes übertragene FSK-modulierte Steuersequenzen anspricht und dazu ein auf dieses Frequenzband abgestimmtes Bandpaßfilter (31) mit nachgeschaltetem FSK-Demodulator (32) aufweist.

6. Verteiler-Netzkomponente für einen Knoten eines baumstrukturierten Übertragungsnetzes mit Leitungsentzerrern nach einem der Ansprüche 1 bis 5, wobei die Verteiler-Netzkomponente (V) einen solchen Leitungsentzerrer $(1_A)$ für eine von der Baumwurzel ankommende Übertragungsleitung aufweist, der je einen Leitungstreiber $(36_{A1}, 36_{A2})$ für eine von mehreren, zur Baumverästelung abgehenden Übertragungsleitungen ansteuert, sowie mehrere solche Leitungsentzerrer $(1_{B1}, 1_{B2})$ für von der Baumverästelung ankommende Übertragungsleitungen aufweist, welche einen gemeinsamen Leitungstreiber $(36_B)$ für eine zur Baumwurzel abgehende Übertragungsleitung ansteuern.

7. Zwischen-Netzkomponente zur Einschaltung zwischen zwei Übertragungsstrecken eines Übertragungsnetzes mit Leitungsentzerrern nach einem der Ansprüche 1 bis 5 und zur Ankopplung dieser Übertragungsstrecken an eine Freiraumübertragungsstrecke, wobei die Zwischen-Netzkomponente (Z) einen solchen Leitungsentzerrer $(1_A)$ für die von der einen Seite ankommende Übertragungsleitung aufweist, der einen Leitungstreiber $(36_A)$ für die auf der anderen Seite abgehende Übertragungsleitung sowie einen Freiraumsender (38) ansteuert, und einen solchen Leitungsentzerrer $(1_B)$ für die auf der anderen Seite ankommende Übertragungsleitung sowie einen Freiraumempfänger (39) aufweist, welche einen gemeinsamen Leitungstreiber $(36_B)$ für die auf der einen Seite abgehende Übertragungsleitung ansteuern.

8. Zwischen-Netzkomponente nach Anspruch 7, dadurch gekennzeichnet, daß sie einen Steuersequenzdetektor aufweist, der ab dem Erkennen einer in das Übertragungsnetz eingespeisten Steuersequenz einen Chirpgenerator (45) an den Leitungstreiber $(36_A)$ für die abgehende Übertragungsleitung der anderen Seite anschaltet, und daß der Freiraumsender (38) mit einem Zeitzähler (46) versehen ist, dessen Starteingang (47) an den Leitungstreiber $(36_A)$ für die abgehende Übertragungsleitung der anderen Seite und dessen Stopeingang (48) an den Leitungsentzerrer $(1_B)$ für die ankommende Übertragungsleitung der anderen Seite angeschlossen ist und dessen Zählwertausgang den Regeleingang eines regelbaren Verzögerungsgliedes (50) ansteuert, das im Freiraumsender (38) angeordnet ist, wobei die Zwischen-Netzkomponente (Z) ferner mit einem weiteren Steuersequenzdetektor ausgestattet ist, der ab dem Erkennen einer in das Netz eingespeisten Steuersequenz die Rückgabe eines von einer vorgeordneten, gleichartigen Zwischen-Netzkomponente (Z) empfangenen Chirpsignales oder die Weitergabe bis zu einer nachgeordneten Netzkomponente (Z, E) auslöst.

9. Zwischen-Netzkomponente nach Anspruch 8, dadurch gekennzeichnet, daß den Start- und Stopeingängen (47, 48) des Zeitzählers (46) jeweils ein Filter (51, 52) mit einer Impulsantwort gleich der Inversen des unverzerrten Chirpsignales und ein diesem Filter nachfolgender Spitzenwertsucher (53, 54) vorgeschaltet sind.

10. End-Netzkomponente für eine Übertragungsstrecke eines Übertragungsnetzes mit Leitungsentzerrern nach einem der Ansprüche 1 bis 5 und zur Ankopplung dieser Übertragungsstrecke an eine Freiraumübertragungsstrecke, wobei die End-Netzkomponente (E) einen solchen Leitungsentzerrer ($1_A$) für eine ankommende Übertragungsleitung, der einen Freiraumsender (38) ansteuert, sowie einen Freiraumempfänger (39) aufweist, welcher einen Leitungstreiber ($36_B$) für eine abgehende Übertragungsleitung ansteuert.

11. End-Netzkomponente nach Anspruch 10, dadurch gekennzeichnet, daß sie mit einem Steuersequenzdetektor ausgestattet ist, der ab dem Erkennen einer in das Netz eingespeisten Steuersequenz die Rückgabe (51) eines von einer vorgeordneten Netzkomponente empfangenen Chirpsignales auslöst.

12. Netzkomponente nach einem der Ansprüche 6 bis 11, dadurch gekennzeichnet, daß jeder Leitungstreiber (36) mit einem durch eine Steuersequenz auslösbaren Chirp- und Sinussignalgenerator ausgestattet ist.

13. Netzkomponente nach einem der Ansprüche 6 bis 12, dadurch gekennzeichnet, daß jeder Leitungsentzerrer (1) einen Befehlssequenzdetektor aufweist, der bei Erkennen einer ihn betreffenden, in die Übertragungsleitung eingespeisten Befehlssequenz eine entsprechende Steuersequenz auslöst.

14. Netzkomponente nach einem der Ansprüche 6 bis 13, dadurch gekennzeichnet, daß die Leitungstreiber (36), Leitungsentzerrer (1), Freiraumsender (38) und -empfänger (39) der Netzkomponente (V, Z, E) untereinander über einen alle Steuersequenzen führenden Datenbus und einen alle Nutzsignale führenden Signalbus mit Zeitmultiplexzuordnung für die einzelnen Nutzsignale verbunden sind.

## Claims

1. Remotely adjustable line equaliser (1) arranged at the end of a transmission line (2), characterised in that the line equaliser (1) comprises:

   a signal transmission path (14 - 17) with an analog-digital converter (15), a digital filter (16) which can be loaded with filter coefficients and a digital-analog converter (17);
   a frequency-response detector (19 - 26) which can be connected to the output of the analog-digital converter (15), detects the frequency response of a chirp signal supplied at the start of the transmission line (2), determines the filter coefficients for the digital filter (16) from the frequency response and therefore controls the coefficient input (18) of the digital filter (16), and
   a control-sequence detector (31 - 33) which is connected to the signal transmission path (14 - 17) and activates the frequency-response detector (19 - 26) for a predetermined period of time in response to a control sequence preceding the chirp signal supplied at the start of the transmission line (2).

2. Line equaliser according to claim 1, characterised in that the digital filter (16) is of the linear type and the frequency-response detector (19 - 26) comprises a digital filter (19) with a pulse response equal to the inverse of the undistorted chirp signal, a peak detector (20) with an interval sampler (21), the sampling interval of which is symmetrised with the time of the peak value and is identical to the duration of the chirp signal, a fast Fourier transformation (FFT) element (22), a complex divider (23) for elementwise division by predetermined nominal coefficients and an inverse fast Fourier transformation (FFT) element (25) connected in series.

3. Line equaliser according to claim 1 or claim 2, characterised in that a multiplier (26) for elementwise multiplication with predetermined window function constants, preferably Hamming window constants is connected upstream of the coefficient input (18) of the digital filter (16).

4. Line equaliser according to one of claims 1 to 3, characterised in that the line equaliser (1) further comprises:

a controllable amplifier (14) connected upstream of the analog-digital converter (15), and
a line loss evaluation path (28 - 30) which can be connected to the output of the analog-digital converter (15), with a sinusoidal signal-adapted filter (28) for a sinusoidal signal supplied at the start of the transmission line (2), a rectifier (29) and a low-pass filter (30), the output of which controls the control input of the amplifier (14), the control-sequence detector (31 - 33) activating the line loss evaluation path (28 - 30) for a predetermined period of time in response to a second control sequence preceding the sinusoidal signal supplied at the start of the transmission line (2).

5. Line equaliser according to one of claims 1 to 4, characterised in that the control-sequence detector (31 - 33) responds to FSK-modulated control sequences transmitted in a frequency band outside the useful signal band and is provided in this connection with a bandpass filter (31) adapted to this frequency band with a downstream FSK-demodulator (32).

6. Distribution network component for a node of a tree-structured transmission network with line equalisers according to one of claims 1 to 5, in which the distribution network component (V) comprises a line equaliser $(1_A)$ of this kind for an incoming transmission line from the root of the tree, controlling respective line drivers $(36_{A1}, 36_{A2})$ for one of a plurality of outgoing transmission lines to the branches of the tree, as well as a plurality of line equalisers $(1_{B1}, 1_{B2})$ of this kind for incoming transmission lines from the branches of the tree, controlling a common line driver $(36_B)$ for an outgoing transmission line to the root of the tree.

7. Intermediate network component for insertion between two transmission links of a transmission network with line equalisers according to one of claims 1 to 5 and for coupling these transmission links to a free-space transmission link, in which the intermediate network component (Z) comprises a line equaliser $(1_A)$ of this kind for the incoming transmission line at one side, controlling a line driver $(36_A)$ for the outgoing transmission line at the other side, as well as a free-space transmitter (38), and comprises a line equaliser $(1_B)$ of this kind for the incoming transmission line at the other side, as well as a free-space receiver (39), controlling a common line driver $(36_B)$ for the outgoing transmission line at one side.

8. Intermediate network component according to claim 7, characterised in that it comprises a control-sequence detector which connects a chirp generator (45) to the line driver $(36_A)$ for the outgoing transmission line at the other side in response to a control sequence supplied to the transmission network and that the free-space transmitter (38) is provided with a time counter (46), the start input (47) of which is connected to the line driver $(36_A)$ for the outgoing transmission line at the other side and the stop input (48) of which is connected to the line equaliser $(1_B)$ for the incoming transmission line at the other side and the counted measurand output of which controls the control input of a controllable delay element (50) arranged in the free-space transmitter (38), the intermediate network component (Z) further being provided with another control-sequence detector which triggers the return of a chirp signal received from an identical upstream intermediate network component (Z) or the relay to a downstream network component (Z, E) in response to a control sequence supplied to the network.

9. Intermediate network component according to claim 8, characterised in that a filter (51, 52) with a pulse response identical to the inverse of the undistorted chirp signal and a peak detector (53, 54) following this filter are connected upstream of the start and stop inputs (47, 48) of the time counter (46).

10. End network component for a transmission link of a transmission network with line equalisers according to one of claims 1 to 5 and for coupling this transmission link to a free-space transmission link, in which the end network component (E) comprises a line equaliser $(1_A)$ of this kind for an incoming transmission line which controls a free-space transmitter (38). as well as a free-space receiver (39) which controls a line driver $(36_B)$ for an outgoing transmission line.

11. End network component according to claim 10, characterised in that it is provided with a control-sequence detector which triggers the return (51) of a chirp signal received from an upstream network component in response to a control sequence supplied to the network.

12. Network component according to one of claims 6 to 11, characterised in that each line driver (36) is provided with a chirp and sinusoidal signal generator which can be triggered by a control sequence.

**13.** Network component according to one of claims 6 to 12, characterised in that each line equaliser (1) comprises an instruction-sequence detector which triggers a corresponding control sequence in response to a relevant instruction sequence supplied to the transmission line.

**14.** Network component according to one of claims 6 to 13, characterised in that the line driver (36), line equaliser (1), free-space transmitter (38) and free-space receiver (39) of the network components (V, Z, E) are connected together by means of a data bus controlling all of the control sequences and a signal bus controlling all of the useful signals with time-division multiplex assignment for the individual useful signals.

**Revendications**

**1.** Egaliseur de ligne (1) réglable à distance, qui est disposé à l'extrémité d'une ligne de transmission (2), caractérisé en ce que l'égaliseur de ligne (1) comprend :

    une voie (14-17) de transmission de signaux comportant un convertisseur analogique/numérique (15), un filtre numérique (16) pouvant être chargé par des coefficients de filtre et un convertisseur numérique/ analogique (17) ;
    un détecteur d'allure en fréquence (19-26), pouvant être raccordé à la sortie du convertisseur analogique/ numérique (15) et qui détecte l'allure en fréquence d'un signal d'expansion-compression introduit à l'entrée de la ligne de transmission (2), détermine les coefficients de filtre pour le filtre numérique (16) à partir de la réponse en fréquence et commande l'entrée (18) des coefficients du filtre numérique (16) ; et
    un détecteur de séquence de commande (31-33), qui est raccordé à la voie (14-17) de transmission de signaux et qui, à partir de l'identification d'une séquence de commande qui est introduite au début de la ligne de transmission (2) et qui précède le signal d'expansion-compression, déclenche pendant une durée prédéterminée le raccordement du détecteur d'allure en fréquence (19-26).

**2.** Egaliseur de ligne selon la revendication 1, caractérisé en ce que le filtre numérique (16) est de type linéaire et que le détecteur d'allure en fréquence (19-26) comporte, selon un montage série, un filtre numérique (19) possédant une réponse impulsionnelle égale à l'inverse du signal d'expansion-compression sans distorsions, un dispositif (20) de recherche de valeurs maximales comportant un dispositif (21) d'échantillonnage d'intervalles, dont l'intervalle d'échantillonnage est symétrique par rapport à l'instant de la valeur maximale et est égal à la durée du signal d'expansion-compression, un circuit (22) pour réaliser la transformation de Fourier rapide (FFT), un diviseur complexe (23) pour réaliser la division, élément par élément, avec des coefficients de consigne prédéterminés ainsi qu'un circuit (25) pour réaliser la transformation de Fourier inverse rapide (FFT).

**3.** Egaliseur de ligne selon la revendication 1 ou 2, caractérisé en ce qu'en amont de l'entrée (19) des coefficients du filtre numérique (16) est branché un multiplicateur (26) servant à réaliser la multiplication, élément par élément, par des constantes prédéterminées d'une fonction fenêtre, de préférence des constantes d'une fenêtre de Hamming.

**4.** Egaliseur de ligne selon l'une des revendications 1 à 3, caractérisé en ce que l'égaliseur de ligne (1) comporte en outre :

    un amplificateur réglable (14), branché en amont du convertisseur analogique/numérique (15) ; et
    une voie (28-30) d'évaluation des pertes en ligne, qui peut être connectée à la sortie du convertisseur analogique/numérique (15) et comporte un filtre (28) adapté pour des signaux sinusoïdaux et servant à filtrer un signal sinusoïdal introduit à l'entrée de la ligne de transmission (2), un redresseur (29) et un filtre passe-bas (30), dont la sortie commande l'entrée de régulation de l'amplificateur (14) ;
    le détecteur de séquence de commande (31-33) déclenchant, à partir de l'identification d'une deuxième séquence de commande, qui est introduite à l'entrée de la ligne de transmission (2) et est en avance par rapport au signal sinusoïdal, le raccordement de la voie (28-30) d'évaluation des pertes en ligne, pendant une durée prédéterminée.

**5.** Egaliseur de ligne selon l'une des revendications 1 à 4, caractérisé en ce que le détecteur de séquence de commande (31-33) répond à des séquences de commande transmises dans une bande de fréquences à l'extérieur de la bande du signal utile et modulées selon une modulation FSK, et comporte à cet effet un filtre passe-bande (31), qui est accordé sur cette gamme de fréquences et comporte un démodulateur FSK (32) branché en aval.

**6.** Composant d'un réseau de distribution pour un noeud d'un réseau de transmission à structure arborescente comportant des égaliseurs de ligne selon l'une des revendications 1 à 5, dans lequel le composant (V) du réseau de distribution possède, pour une ligne de transmission arrivant des racines de l'arbre, un égaliseur de ligne ($1_A$), qui commande respectivement un étage d'attaque de ligne ($36_{A1}$, $36_{A2}$) pour l'une de plusieurs lignes de transmission, qui partent en direction des branches de l'arbre, et comporte, pour des lignes de transmission arrivant des branches de l'arbre, plusieurs égaliseurs de ligne ($1_{V1}$, $1_{V2}$) qui commandent un étage d'attaque de ligne commun ($36_B$) pour une ligne de transmission partant en direction des racines de l'arbre.

**7.** Composant intermédiaire de réseau destiné à être inséré entre deux sections de transmission d'un réseau de transmission comportant des égaliseurs de ligne selon l'une des revendications 1 et 5 et pour l'accouplement de ces sections de transmission à une section de transmission dans l'espace libre, dans lequel le composant intermédiaire de réseau (Z) comporte, pour la ligne de transmission arrivant d'un côté, un égaliseur de ligne ($1_A$), qui commande un étage d'attaque de ligne ($36_A$) pour la ligne de transmission qui part de l'autre côté, ainsi qu'un émetteur dans l'espace libre (38), et comporte pour la ligne de transmission arrivant sur l'autre côté, un égaliseur de distorsion ainsi qu'un récepteur dans l'espace libre (39), qui commandent un étage de ligne commun ($36_B$) pour la ligne de transmission partant d'un côté.

**8.** Composant intermédiaire de réseau selon la revendication 7, caractérisé en ce qu'il comporte un détecteur de séquence de commande, qui, à partir de l'identification d'une séquence de commande introduite dans le réseau de transmission, raccorde un générateur d'expansion-compression (45) à l'étage d'attaque de ligne (36A) pour la ligne de transmission de départ de l'autre côté, et que l'émetteur dans l'espace libre (38) est équipé d'une minuterie (46), dont l'entrée de démarrage (47) est raccordée à l'étage d'attaque de ligne ($36_A$) pour la ligne de transmission de départ de l'autre côté et dont l'entrée d'arrêt (48) est raccordée à l'égaliseur de ligne ($1_A$) pour la ligne de transmission arrivante de l'autre côté, et dont la sortie de valeur chiffrée commande l'entrée de régulation d'un organe de retardement réglable (50), qui est disposé dans l'émetteur dans l'espace libre (38) le composant intercalaire de réseau (Z) étant en outre équipé d'un autre détecteur de séquence de commande, qui à partir de l'identification d'une séquence de commande introduite dans le réseau, déclenche le renvoi d'un signal d'expansion-compression reçu par un composant intercalaire de réseau (Z) de même type disposé en amont, ou déclenche la retransmission jusqu'à un composant du réseau (Z, E), installé en aval.

**9.** Composant intercalaire de réseau selon la revendication 8, caractérisé en ce qu'en amont des entrées de démarrage et d'arrêt (47, 48) de la minuterie (46) sont branchés respectivement un filtre (51, 52) ayant une réponse impulsionnelle égale à l'inverse du signal égalisé de l'expansion-compression, et une unité (53, 54) de recherche de valeurs maximales, branchée en aval de ce filtre.

**10.** Composant d'extrémité de réseau pour une section de transmission d'un réseau de transmission comportant des égaliseurs de ligne selon l'une des revendications 1 à 5 et pour l'accouplement de cette section de transmission à une section de transmission dans l'espace libre, dans lequel le composant final de réseau (M) comporte, pour une ligne de transmission d'arrivée, qui commande un émetteur dans l'espace libre (38), un égaliseur de ligne ($1_A$), qui commande un étage d'attaque de ligne ($36_B$) pour une ligne de transmission de départ, ainsi qu'un récepteur dans l'espace libre (39).

**11.** Composant final de réseau selon la revendication 10, caractérisé en ce qu'il est équipé d'un détecteur de séquence de commande qui, à partir de l'identification d'une séquence de commande introduite dans le réseau, déclenche un renvoi (51) d'un signal d'expansion-compression reçu par un composant de réseau disposé en amont.

**12.** Composant du réseau selon l'une des revendications 6 à 11, caractérisé en ce que chaque étage d'attaque de ligne (36) est équipé d'un générateur de signaux d'expansion-compression et d'un générateur de signaux sinusoïdaux, pouvant être déclenchés par une séquence de commande.

**13.** Composant de réseau selon l'une des revendications 6 à 12, caractérisé en ce que chaque égaliseur de ligne (1) possède un détecteur de séquence d'instruction, qui déclenche une séquence de commande correspondante lors de l'identification d'une séquence d'instruction qui concerne ce détecteur et qui est introduite dans la ligne de transmission.

**14.** Composant de réseau selon l'une des revendications 6 à 13, caractérisé en ce que l'étage d'attaque de ligne (36), un égaliseur de ligne (1), un émetteur dans l'espace libre (38) et un récepteur dans l'espace libre (39) du composant de réseau (V, Z, E) sont reliés entre eux par l'intermédiaire d'un bus de transmission de données qui véhicule toutes les séquences de commande et d'un bus de transmission de signaux, qui véhicule tous les signaux utiles, avec association par multiplexage temporel pour les différents signaux utiles.

Fig.1

Fig.2

Fig.3

Fig.4

Fig.5

Fig.6

Fig.7

Fig.8

Fig. 9

Fig. 10

Fig. 11

Fig. 12

Fig. 13

17